# EUROPEAN PATENT SPECIFICATION

(11) **EP 2 557 055 B1**
(45) Date of publication and mention of the grant of the patent: **29.10.2014**
(21) Application number: 11006613.1
(22) Date of filing: 10.08.2011
(51) Int. Cl.: B65D 33/16, B65D 75/58

(54) **Packaging combination comprising a tubular casing and a dispensing device with opening means**
Verpackungskombination mit einer schlauchförmigen Verpackung und einer Ausgabevorrichtung mit Öffnungsmittel
Combinaison d'emballage comprenant une enveloppe tubulaire et un dispositif de distribution doté de moyens d'ouverture

(43) Date of publication of application: 13.02.2013
(73) Proprietor: Poly-clip System GmbH & Co. KG, 65795 Hattersheim (DE)
(72) Inventor: Niedecker, Frank, 6948 Porza (CH)
(74) Representative: Eisenführ Speiser

(56) References cited:
- EP-A1- 2 058 234
- EP-A1- 2 157 026
- DE-A1- 3 500 625
- US-A1- 2009 236 365

## Description

The present invention relates to a packaging combination for accommodating and dispensing a viscous or granular filling material according to claim 1. The present invention further relates to a dispensing device according to claim 14 for being attached to a tubular casing as well as to a tubular casing according to claim 15 to which a dispensing device according to claim 14 may be attached.

In particular, the present invention relates to a packaging combination for accommodating and dispensing a viscous or granular filling material, the packaging combination comprises a tubular casing having a first and a second end, wherein the tubular casing is partially filled with filling material and closed at its first as well as its second end by closure means, like closure clips. The packaging combination further comprises a dispensing device having a passageway extending through the dispensing device with an inlet opening at its one end and a dispensing opening at its other end for guiding and dispensing the filling material in a dispensing direction, and being attached to the first end of the partially filled and closed tubular casing. The plait-like portion of the tubular casing extends through the passageway and beyond the dispensing opening of the dispensing device such that the closure means closing said first end is arranged outside the dispensing opening.

In practice, packaging combinations comprising a tubular casing filled with filling material and closed at its ends by closure means, and a dispensing device are known. The tubular casings of said packaging combinations are filled with various pasty filling materials, e.g. food stuff, like sausage meat, or adhesives, like silicone, etc.

From EP patent application 1 988 032, a tubular or sausage-shaped packaging is known, being filled with sausage meat. The sausage-shaped product is produced by closing a tubular casing at one end, filling the sausage meat into said tubular casing and closing the filled tubular casing at its respective other end. In order to allow an easier opening of the sausage-shaped product, perforation lines including a number of weak locations are provided on the casing, along which the casing may be opened by pulling off the casing material and dispensing the sausage meat.

In US patent application 2008/0274313, a sausage-shaped product similar to that of EP patent application 1 988 032 is disclosed. In order to allow an easier opening of the casing material, a handle in form of a tear stripe is attached to the casing, in particular between the two overlapping longitudinal edges of the casing material. Two material weakenings are provided at both sides of the tear stripe facilitating the opening of the casing.

Moreover, German laid open document 38 31 225 discloses a device for dispensing the filling material stored in a tubular or bag-shaped packing. The device includes a ridged tube having a dispensing nozzle at its one end. A bag-shaped casing has then to be containing a pasty filling material, like an adhesive, has to be opened at one end and has then to be positioned in said rigid tube with its opened end facing the dispensing nozzle. A piston matching the inner diameter of the tube is pushed into the tube, thereby squeezing the bag-shaped packaging and dispensing the filling material through the dispensing nozzle.

With this known packaging combination, it is of disadvantage that the rigid tube has outer circumferential dimensions being such that the complete bag-shaped casing can be accomodated in said rigid tube. If this known packaging combination is provided as a disposable device, this solution is expensive due to the big rigid tube being made from relatively expensive plastics. If this known packaging combination used such that only bag-shaped casing is thrown away and the rigid tube is used several times, the bag-shaped casing must be opened outside the tube so that, when the opened bag-shaped casing is introduced in the rigid tube, filling material can accidently discharged and can pollute the environment.

Furthermore, from DE laid open document 35 00 625, a packaging combination with a tubular casing that is partially filled with filing material and closed at its two ends is known. At one end of the tubular packaging casing, an end cap with a collar that has a circular center opening is provided. A closed end of the packaging casing is insertable through the opening of the end cap in a way that the area of the packaging casing comprising the closure means protrudes the collar of the end cap. Furthermore, an additional dispensing cap for being mounted onto the collar of the end cap is provided. For using the packaging combination, the part of the packaging casing protruding the collar of the end cap has to be cut-off by a cutting means. Thus, this combination has the disadvantage that additional cutting means are necessary for opening the packaging casing.

In EP patent application 2 157 026, a clamping device for a flexible packaging casing is known. The clamping device can be attached to a closed end of the packaging casing and clamped by means of a cap, which is mountable onto the clamping device. For using the packaging casing, the cap has to be removed from the clamping device first. Subsequently, the closed part of the packaging casing has to be cut-off by an external cutting means and a dispensing device has to be mounted onto the clamping device. This configuration also has the disadvantage that an external cutting means is necessary for opening the packaging casing.

Moreover, EP patent application 2 058 234 discloses a packaging combination with a packaging casing closed at one end by a wall and the other end by a fitting adapter with a predetermined breaking point. The adapter comprises an actuation means for breaking the predetermined breaking point for removing a tear-off part for opening the closed packaging casing. This configuration has the disadvantage that it is comparatively exhausting to open the packaging casing. Beyond that, it is quite likely that opening the packaging casing causes a hitch, resulting in splattering of small amounts of the content of the packaging casing. In addition, such packaging combination is not ideal for relatively flexible packaging casings because due to the application of an opening force, the packaging casing could be squeezed and thus dispensing a part of the content.

From US patent application 2009/0236365, a dispensing container with a threaded open end is known. The open end is closed by a removable seal. However, such configuration is not applicable for sausage-shaped packaging casings being closed at both ends because such tear-off seal is not eligible in the production of sausage-shaped products for properly closing the product.

Thus, it is an object of the present invention to provide a packaging combination, with which the above mentioned drawbacks have been overcome, and which allows an easy and save opening of the tubular casing.

According to the present invention, there is provided a packaging combination for accommodating and dispensing a viscous or granular filling material, the packaging combination comprises a tubular casing having a first and a second end, wherein the tubular casing is partially filled with filling material and closed at its first as well as its second end by a closure means, like a closure clip, wherein the partially filled tubular casing comprises a plait-like portion at its first end being at least approximately free of filling material. The packaging combination further comprises a dispensing device having a passageway extending through the dispensing device with an inlet opening at its one end and a dispensing opening at its other end for guiding and dispensing the filling material in a dispensing direction, and being attached to the first end of the partially filled and closed tubular casing. The plait-like portion of the tubular casing extends through the passageway and beyond the dispensing opening of the dispensing device such that the closure means closing said first end is arranged outside the dispensing opening. Moreover, at least the dispensing device comprises leastwise an element opening means for opening the tubular casing.

This configuration of a packaging combination enables a safe and easy opening of the tubular casing by removing the closure means extending beyond the dispensing opening by means of the opening means and a safe and easy dispensing of the filling material just by squeezing the filled tubular casing portion. Thus, an accidental discharge of filling material due to the force used to introduce the casing into a dispensing tube is avoided.

In an advantageous embodiment of the packaging combination according to the present invention, the dispensing device includes at least a first and a second portion, wherein the first portion extends from the inlet opening of the passageway in the dispensing direction and the second portion extends from the dispensing opening opposite to the dispensing direction, and wherein the inner circumferential dimensions of the first portion corresponds at least approximately to the outer circumferential dimensions of the tubular casing.

Preferably, the cross-section of the first portion of the dispensing device corresponds to the cross-section of the tubular casing, i.e. both, the first portion and the tubular casing, are of a circular cross-section, whereby the outer diameter of the tubular casing corresponds to the inner diameter of the first portion of the dispensing device. This allows a form-fit attachment of the dispensing device to the filled tubular casing. The term "circumferential dimension" has not only to be understood as the sole circumference, but also as a dimension characterizing a cross-section, like the length or width of a rectangle, a side length of a triangle or a diameter of a circle. Naturally, the first portion of the dispensing device and the tubular casing may be of any other suitable form, i.e. of a rectangular or triangular shape, the remarkable point is that their cross sections or circumferential dimensions correspond to each other.

In a further advantageous configuration, the inner circumferential dimensions of the second portion of the dispensing device are smaller than the inner circumferential dimensions of the first portion of the dispensing device. Thereby, the dispensing opening is smaller than the outer diameter of the tubular casing, which allows a more precise dispensing of the filling material.

The first portion and the second portion of the dispensing device can be coupled directly with each other, whereby the dispensing opening is fixedly positioned relative to the second portion of the dispensing device and also to the tubular casing attached to the dispensing device.

As stated above, according to the present invention, leastwise an element of the opening means can be arranged at the dispensing device. In a preferred embodiment, one opening means are entirely provided at the dispensing device, This provides a simple and cheap solution for opening the tubular casing. In principle, one opening means are sufficient. However, several opening means can be provided at the dispensing device, for example in a constant distance in the circumferential direction of the dispensing device.

In a preferred embodiment of the present invention, opening means are formed by a preferably V-shaped cutout in the dispensing device. For opening the inventive packaging combination, the closure means of the first end of the tubular casing may easily be removed by pulling the plait-like portion through said cutout.

For facilitating an easy cutting of the plait-like portion, the opening means includes at least one cutting element. In one embodiment, said cutting element can be a cutting edge in said V-shaped cutout.

In a further embodiment of the present invention, the opening means is a cutout in the dispensing device and includes at least one cutting element being provided within the cutout and projecting into the clearance of the cutout. The cutout may have any desired shape, like a U-shape, and the cutting element may be a projection integrally formed with the dispensing device, like an arbor extending, for example, from the bottom section of the cutout. Naturally, the cutting element may also be blade-shaped and may project from any suitable wall portion of the cutout. Alternatively, the opening means may be a W-shaped cutout, wherein the central tip of the W forms the cutting element including a sharpened tip end or sharpened edges for opening the tubular casing. The cutting element may also be a separate element being inserted into the cutout, like a metal plate or a needle having sharpened edges and being inserted in a wall section of the cutout. It has to be noted, that the cutting element preferably, but not exclusively, should project into the clearance of the cutout to prevent an unintentional damage of the casing material.

According to a further preferred embodiment of the present invention, the packing combination includes a closure cap reversibly attachable to the dispensing device for releasing and closing the dispensing opening. A reversibly attachable closure cap reliably prevents the filling material from unintentionally escaping from the packaging combination and further allows storing and reusing an opened packaging.

For releasing and closing the dispensing opening by a closure cap, the dispensing device has an external screw thread at its outside and the closure cap has a corresponding internal screw thread at its inside for being attached to the external screw thread of the dispensing device. Alternatively, the dispensing device may have an internal screw thread at its inner surface. In this case, the closure cap has a corresponding outer screw thread at its outer surface. In this alternative constitution of the closure cap, its inner surface may be designed independently from said screw thread and may have any desired inner shape.

In an advantageous embodiment of the packaging combination, the closure cap has a clearance arranged inside the closure cap and behind the internal screw thread in the dispensing direction, for accommodating the first end of the closed tubular casing, when attached to the dispensing device. This clearance prevents the plait-like portion of the partially filled tubular casing from being pushed back into the dispensing device and allows an easy capturing the closure means attached to the plait-like portion and removing therefrom.

In a further advantageous embodiment of the packaging combination, at least one element of the opening means is provided at the dispensing device and at least another element of the opening means is provided at the closure cap. Both elements of the opening means may be configured to engage each other for securely open the tubular casing.

The at least one element of the opening means, advantageously be provided at the dispensing device, may be adapted to hold the first end of the tubular casing such that the closure means are placed outside the dispensing device and that the at least one element of the opening means provided at the closure cap is adapted to cutoff the first end of the tubular casing together with the closure means. This configuration of the elements of the opening means enables a safe and reliable opening of the tubular casing by cutting off the first end of the tubular casing.

In an preferred configuration, the closure cap is provided with abutment means and the at least one element of the opening means provided at the closure cap is arranged, directed in the abutment direction of the closure cap to the dispensing device, behind the abutment means. The abutment direction is directed opposite to the dispensing direction, such that, by closing the dispensing device with the closure cap for the first time, the abutment means provided inside the closure cap, abut against the dispensing opening of the dispensing device.

The abutment means thereby preventing an unintentional cutting off of the first end of the tubular casing when closing the dispensing device with the closure cap for the first time. The abutment means may be formed by a notch or lug provided at the inside of the closure cap in a central region of its internal screw thread. Naturally, more than one notch or lug may be provided in the closure cap, e.g. for adjusting a desired break force for breaking off the abutment means when opening the tubular casing for the first time. Said abutment means, as well as the element of the opening means provided at the closure cap, may be of the same material as the closure cap and may integrally be formed thereto. The element of the opening means, in a simple case, may be a sharp edge formed to a pitch of the internal screw thread, or may be a separate element, like a blade-shaped notch.

Furthermore, according to the present invention, the abutment means are adapted to be broken with the first opening of the packaging combination. The broken abutment means may thereby indicate that the packaging combination has already been open and thus, may prevent an accidental outflow of the filling material.

It is further advantageously, that for the first closing of the packaging combination, the closure cap is adapted to be closed on the dispensing device until reaching the abutment means and that, for the first opening of the packaging combination, the closure cap is adapted to be moved further in the abutment direction for breaking the abutment means and for bringing in engagement the at least one element of the opening means provided at the dispensing device, with the first end of the tubular casing provided at the at least one element of the opening means arranged at the dispensing device for cutting off the first end of the tubular casing together with the closure means. In this configuration, the abutment means, on one hand, provide a resistance when closing the closure cap for the first time on the dispensing device, thereby preventing an unintentional or accidental opening. On the other hand, closing the closure cap up to the end without any resistance, may be an indication for the tubular casing to already be open.

In a preferred constitution, an indicating unit for indicating the originality of the closure of the dispensing opening is provided at the dispensing device. Alternatively, the indicating unit may be attached to the closure cap. Said indicating unit surely displays whether or not the inventive packaging combination has already been opened.

As mentioned above, the dispensing device is attached to the tubular casing for forming the inventive packaging combination. To avoid the dispensing device from dropping off from the tubular casing, the dispensing device is secured to the first end of the tubular casing by an adhesive, in particular, by a hot-melt adhesive. Naturally, in case that sensitive filling materials are filled into the tubular casing, other adhesive means, like an adhesive tape, may be used, which e.g. may not be heated.

In a further preferred embodiment, the packaging combination comprises a dispensing nozzle having preferably an internal screw thread for being reversibly attachable to the external screw thread of the dispensing device. Said nozzle may at least partially have a cone-shape to be cut-off to adapt the size of the opening of said nozzle to the intended use.

The object of the present invention may also be solved by a dispensing device for being attached to a tubular casing to form a packaging combination according to the invention described above.

In particular, the axial length of the dispensing device can be much shorter than the axial length of the tubular casing. In case of a packaging combination comprising that dispensing device is provided as a disposable, the amount material which has to be thrown away is remarkably reduced compared to the material in the case of known packaging combinations as described previously. This will reduce costs for producing the packaging combination and will also protect the environment.

Moreover, the object of the present invention may further be reached by a tubular casing partially filled with a filling material and closed at its first as well as its second end by closure means, like closure clips, for being combined with a dispensing device to from a packing combination according to the invention described above.

Further advantages and a preferred embodiment will be described in the following together with the drawings listed below. The expressions "left", "right", "below" and "above" are referred to the drawings in an alignment such that the reference numbers used can be read in normal.

In the drawings:
- Fig. 1:: is a perspective view to a first embodiment of the packaging combination according to the present invention;
- Fig. 2:: is an enlarged perspective view to the first end of the packaging combination of Fig. 1;
- Fig. 3:: is a longitudinal cross-section to the embodiment of the packaging combination of Fig. 1;
- Fig. 4:: is a perspective view to a second embodiment of the packaging combination according to the present invention; and
- Fig. 5:: is a longitudinal cross-section to the embodiment of the packaging combination of Fig. 4.

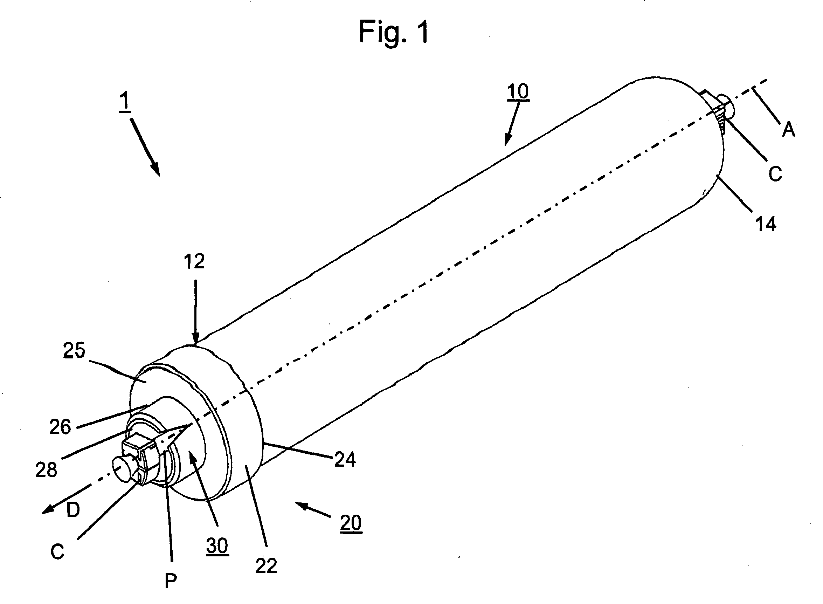

Fig. 1 shows a perspective view to a first embodiment of the packaging combination 1 according to the invention. The packaging combination 1 includes a sausage-shaped tubular casing 10 having a first end 12 and a second end 14 both closed by closure clips C, and a dispensing device 20 attached to the first end of 12 of tubular casing 10. Tubular casing 10 has a central axis A extending through first end 12 and second end 14. Dispensing device 20 has a first portion 22 including an inlet opening 24 and a second portion 26 including an outlet or dispensing opening 28. As it further can be seen in Fig. 1, first end 12 of tubular casing 10 has a plait-like portion P which extends through dispensing device 20 via inlet opening 24 and dispening opening 28. Thereby, closure clip C closing first end 12, projects from dispensing opening 28 in the dispensing direction D.

In the embodiment of packaging combination 1 according to Fig. 1, tubular casing 10 is of a circular cross-section. Accordingly, also dispensing device 20 is of a generally circular cross-section at least for the first portion 22. First portion 22 of dispensing device 20 has an inner and outer cylindrical shape having an inner diameter which corresponds to the outer diameter of tubular casing 10. Second portion 26 which also has an inner and outer cylindrical shape, is directly coupled to first portion 22 in the dispensing direction D via an annular offset 25. First portion 22, annular offset 25 and second portion 26 are coaxially arranged to central axis A of tubular casing 10. Moreover, the axial length of dispensing device 20 is clearly shorter than the axial length of the tubular casing 10. Thereby, dispensing device 20 is preferably made of plastics.

As it can further be seen in Fig. 1, dispensing device 20 includes opening means 30 in the form of a V-shaped cutout in second portion 26. The opened or upper end of said V-shaped cutout 30 is aligned to the upper end of second portion 26 directed in dispensing direction D. The lower or tip end of said V-shaped cutout 30 and terminates in a distance to annular offset 25, which is sufficient, to enable closure cap 40 or dispensing nozzle 50 covering and sealing V-shaped cutout in second portion 26, when attached thereto. The size or at least the heights of V-shaped cutout in second portion 26 may be selected to be as small as possible, i.e. to correspond to the size, like the diameter, of plait-like portion P.

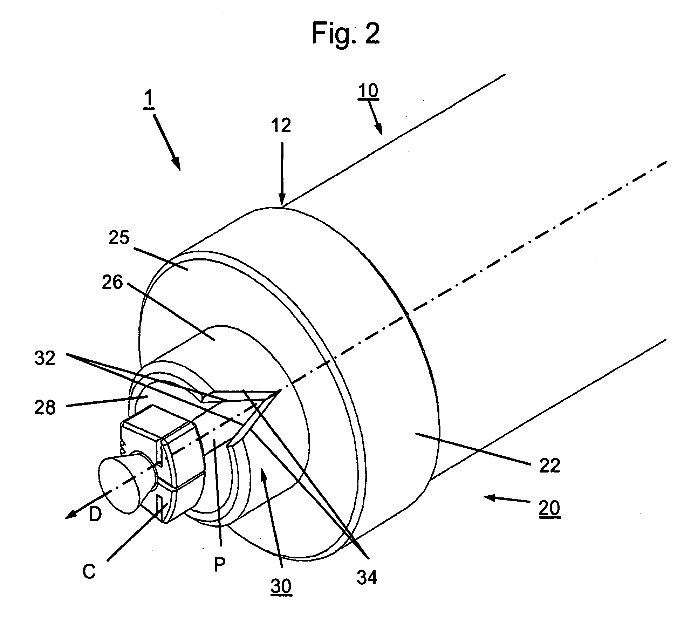

Fig. 2 is a detailed perspective view to the first end of the packaging combination 1 as described in conjunction with Fig. 1. As shown in Fig. 2, V-shaped cutout 30 is arranged in second portion 26 of dispensing device 20 and is aligned with its upper or opened end to the upper end of second portion 26. The tip end of V-shaped cutout 30 is directed towards annular offset 25.

Due to the thickness of dispensing device 20, and in particular the thickness of second portion 26, V-shaped cutout 30 forms two approximately planar surfaces along the "V", touching each other at the tip end of V-shaped cutout 30. Said approximately planar surfaces are restricted by approximately linear inner edges 32 at the inner surface of second portion 26 and by approximately linear outer edges 34 at the outside or outer surface of second portion 26.

Inner edges 32 are sharpened for forming cutting elements, so called cutting edges. According to the embodiment of Fig. 2, the "V" formed by inner edges 32 is slightly smaller than the "V" formed by outer edges 34. Thus, plait-like portion P at first comes in contact with inner edges 32 when pulled through V-shaped cutout 30. Naturally, also outer edges 34 may be sharpened for forming cutting elements. In this case, the "V" formed by outer edges 34 should be slightly smaller than the "V" formed by inner edges 32.

For opening tubular casing 10 for dispensing the filing material, closure clip C attached to plait-like portion P is grasped and plait-like portion P is pulled through V-shaped cutout 30 along cutting edges 32, 34. Closure clip C together with a respective portion of plait-like portion P is cutoff from tubular casing 10 which thereby is opened.

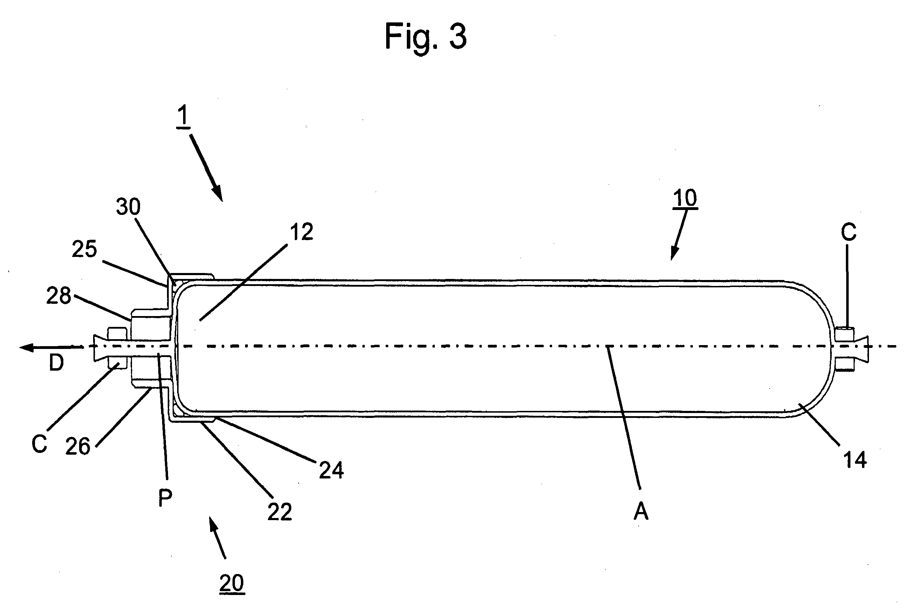

Fig. 3 shows a longitudinal-section along central axis A of the embodiment of the packaging combination 1 of Fig. 1. As it can be seen in Fig. 2, the outer diameter of tubular casing 10 corresponds to the inner diameter of the first portion 22 of dispensing device 20. Annular offset 25 and first portion 22 are approximately rectangular aligned to each other, thereby forming a flange surrounding the outer edge of first end 12 of tubular casing 10. Between inlet opening 24 and dispensing opening 28, then extends a passageway formed by the inner walls of the first and second portion 22, 26 of the dispensing device 20.

For fixedly attaching dispensing device 20 to tubular casing 10, an adhesive G, preferably a hot-melt adhesive, is disposed at the inside of the flange formed by annular offset 25 and first portion 22. The amount of adhesive G is sufficient for at least approximately filling the gap between first end 12 of tubular casing 10, annular offset 25 and first portion 22 of dispensing device 20.

Plait-like portion P at the first end 12 of tubular casing 10, which is at least approximately free from filling material and which has been formed in a known manner during filling and closing tubular casing 10, has a length that corresponds to the axial length of the second portion 26 of dispensing device 20. The length of plait-like potion P is at least equal to the axial length of the second portion 26 of dispensing device 20 in order to ensure that closure clip C closing the first end 12 of tubular casing 10 projects from outlet opening 28 of dispensing device 20 in the dispensing direction D. It has to be understood that, for attaching dispensing device 20 to first end 12 of tubular casing 10, the inner diameter of the second portion 26 of dispensing device 20, forming the dispensing opening 28, has to be at least slightly larger than the outer diameter of the closed closure clip C attached to first end 12. Accordingly, in order to open the packaging combination 1, closure clip C of first end 12 may be gripped and removed from first end 12 of tubular casing 10 and the filing material stored in tubular casing 10 may be dispensed by squeezing tubular casing 10.

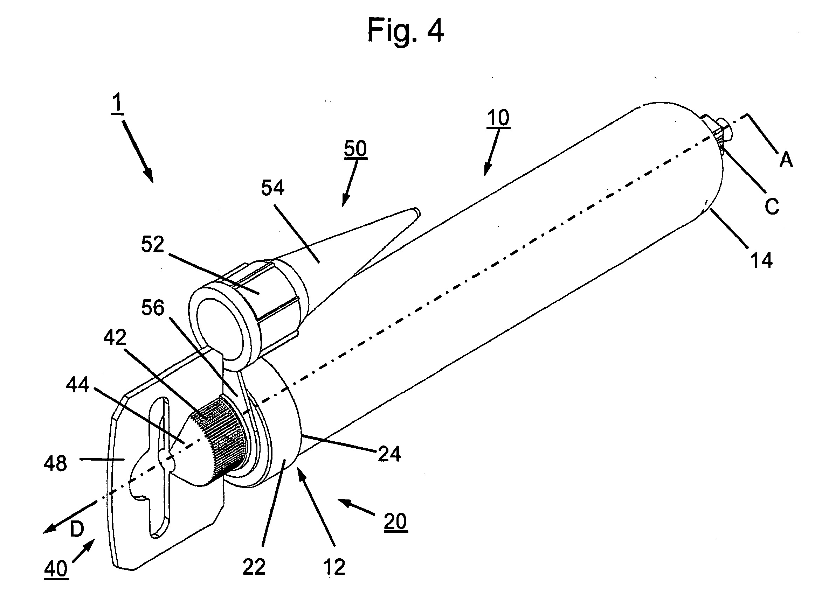

A second embodiment of packaging combination 1 is shown in Fig. 4. This packaging combination 1 includes the tubular casing 10 having a first end 12, a second end 14 as well as a plait-like portion P and the dispensing device 20 having a first portion 22 including an inlet opening 24 and a second portion 26 including an outlet opening 28, both known from the embodiment according to Figs. 1 to 3.

Additionally, the packaging combination 1 includes a closure cap 40 for closing dispensing opening 28 of dispensing device 20 and a dispensing nozzle 50 for being attached to the dispensing opening 28, in order to dispense a desired amount of filling material.

Closure cap 40 includes a cylindrical portion 42 having a first end 42a and a second end 42b and a conical portion 44 being attached to second end 42b of cylindrical portion 42. As it can be seen in Fig. 4, which is a longitudinal-section to the embodiment of the packaging combination 1 of Fig. 3, the inner diameter of cylindrical portion 42 corresponds to the outer diameter of second portion 26 of dispensing device 20. The axial length of cylindrical portion 42 is at least approximately equal to the axial length of second portion 26 of dispensing device 20. As it can be seen in Fig. 4, cylindrical portion 42 is slightly longer than cylindrical portion 42. Together with hollow conical portion 44, inside closure cap 40, a clearance 46 is provided for accommodating the first end 12 of tubular casing 10 or at least closure clip C closing said first end 12 and extending beyond dispensing opening 28 in the dispensing direction D, when closure cap 40 is attached to dispensing device 20.

In order to reversibly attach and release closure cap 40 to or from dispensing device 20, in particular to or from second portion 26 of dispensing device 20, an inner screw thread is provided at the inner surface of cylindrical portion 42 of closure cap 40, which matches with an outer screw thread provided at the outer surface of second portion 26 of dispensing device 20.

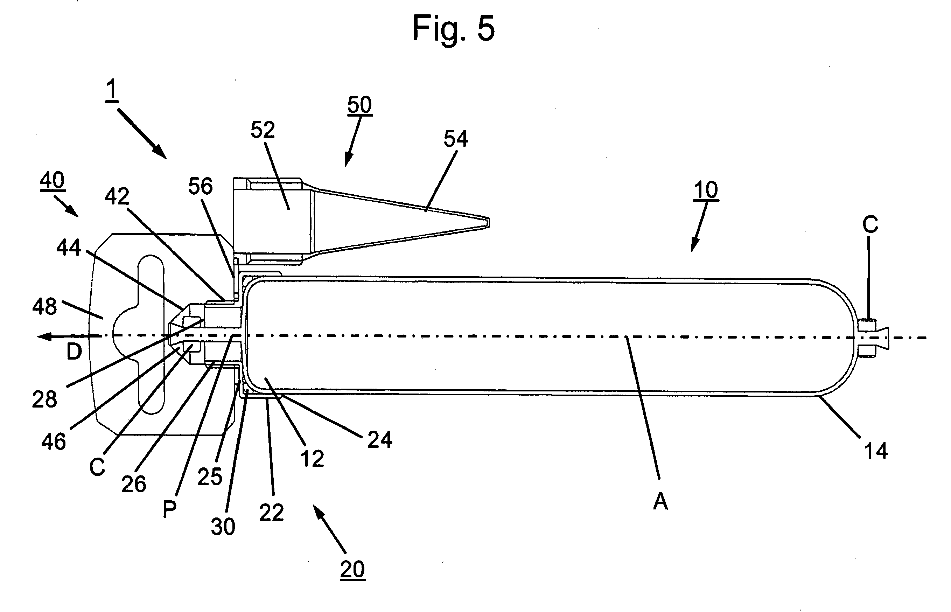

Closure cap 40 according to Figs. 4 and 5 further comprises a flat fin member 48 arranged in a plane extending through longitudinal axis A of tubular casing 10, when being attached to dispensing device 20. Flat fin member 48 is coupled to the outside of cylindrical portion 42 and conical portion 44, and includes an opening arranged above conical portion 44 in the dispensing direction D. Fin member 48 thereby forms a hanger. For an easier opening of closure cap 40, the outer surface of cylindrical portion 42 is provided with grooves extending parallel to axis A.

As mentioned above, packaging combination 1 of Figs. 4 and 5 further includes dispensing nozzle 50. Dispensing nozzle 50 has a hollow cylindrical portion 52 and a hollow conical portion 54 coupled to cylindrical portion 52. At the inner surface of cylindrical portion 52, an inner screw thread is provided matching with outer screw thread of second portion 26 of dispensing device 20 for reversibly attaching dispensing nozzle 50 thereto. Hollow conical portion 54 is open at its one end, which is coupled to conical portion 54 and closed at its other end forming a tip. In order to allow filling material to be dispensed through dispensing nozzle 50, the tip has to be cut off. The size or diameter of the dispensing opening of nozzle 50 depends on the position of the cutoff at conical portion 54 of dispensing nozzle 50. Nozzle 50 further comprises a flap element 56 extending radially from cylindrical portion 52 and including a circular opening for securing dispensing nozzle 50 to second portion 26 of dispensing device 50.

The packaging combination 1 according to the present invention further comprises an indicating unit (not shown) for indicating the originality of the closure of the dispensing opening. Said indicating unit may have the form of a small sheet attached to the dispensing device 20, e.g. at the outside of annular offset 25 for being coupled with closure cap 40 when being closed for the first time. When opening originally closed packaging combination 1, the indicating unit is removed from closure cap 40 and/or from annular offset 25 of dispensing device 20, indicating that packaging combination 1 is not originally closed anymore, and further indicating, in case of the presence of a cutting element inside closure cap 40, that tubular casing 10 is opened and that filling material may escape from packaging combination 1 when releasing closure cap 40. The indicating unit may also be originally attached to the closure cap 40 and may than be coupled to dispensing device 20 when being closed for the first time. Naturally, an indicating unit may also be attached to any other suitable part of the packaging combination, where its possible to indicate the originality of the closure of the dispensing device or at least of the dispensing opening.

Alternatively to the separate indicating unit for indicating the originality of the closure of the dispensing opening as disclosed above, plait-like portion P may be inserted into the V-shaped cutout in dispensing device 20, thereby positioning closure clip C of the first end 12 of tubular casing 10 outside second portion 26 of dispensing device 20. Closure cap 40 may than partially be attached to the outer screw thread of dispensing device 20, e.g. by its inner screw thread, without damaging plait-like portion P. The presence of closure clip C, when closure cap 40 is attached to dispensing device 20, may also indicate the originality of the closure of the packaging combination, in particular the closure of tubular casing 10.

To prevent plait-like portion P from accidentally being damaged or cutoff, when closure cap 40 is partially attached to dispensing device 20 and maintaining the originality of the closure of the packaging combination is intended, an abutment means may be provided inside closure cap 40, e.g. in the form of notches or lugs. When closing closure cap 40 to second portion 26 of dispensing device 20, abutment means or abutment notches abut against outlet opening 28 formed by the upper edge of second portion 26. The abutment notches provide a resistance against a further closing of closure cap 40, indicating the originality of the closure of packaging combination 1. When further closing closure cap 40, the abutment notches are broken and plait-like portion P laying in the V-shaped cutout in the second portion 26 of dispensing device 20 is cutoff together with closure clip C positioned outside second portion 26 of dispensing device 20.

For dispensing filling material from packaging combination 1, closure cap is removed and tubular casing 10 is squeezed. Thereby, the remaining portion of plat-like portion P straightens in dispensing direction D. The filling material squeezed out of tubular casing 10 thereby unfolds plait-like portion P to a width at least approximately corresponding to the inner diameter of second portion 26 of dispensing device 20. The casing material of former plait-like portion P thereby covers the V-shaped cutout in second portion 26, and prevents filling material from entering the V-shaped cutout.

Adhesive G provided at the inside of the flange formed by annular offset 25 and first portion 22 in order to secure dispensing device 20 to the first end 12 of tubular casing 10 has been described as being a hot-melt adhesive. Dependent on the material of tubular casing, which may be a suitable plastic foil or a natural material, the material of dispensing device 20, which is preferably made of plastic but also from any other suitable material, like a metal, the adhesive G may also be an other than a hot-melt adhesive. E.g. in case of temperature sensitive filling materials or casing material, a cold acting adhesive is required.

It has to be understood, that V-shaped cutout 30 is of a height lower than the height of the external screw thread provided at the outside of second portion 26, or at least the height of second portion 26, for attaching closure cap 40 or dispensing nozzle 50 thereto, for enabling a save sealed closing of packaging combination 1.

Moreover, the width of the upper or open end of V-shaped cutout 30 should be at least equal to the diameter of plait-like portion P for enabling a save and easy insertion of plait-like portion P into V-shaped cutout 30 for cutting off closure clip C.

The inventive opening means according to Figs. 1 and 2 are formed by V-shaped cutout 30 having linear cutting edges 32, 34. A cutout or cutting means according to the present invention may also comprise non-linear cutting edges, e.g. curved cutting edges. In case of strong casing material, also toothed cutting edges may be provided.

The inventive opening means may also have a form different from the prescribed V-shape, e.g. the opening means may also be formed by a U-shaped or semicircular cutout, which size at least approximately corresponds to the diameter of the plait-like portion.

It has to be understood that, for partially closing closure cap 40 to dispensing device 20 without damaging plait-like portion P, the cutout has to be slightly larger than plait-like portion P.

Furthermore, more than one cutout in second portion 26 may be provided, e.g. in regular distances around dispensing opening 28.

Alternatively, the upper inner and/or outer edge of second portion, surrounding dispensing opening 28 may be sharpened or toothed for forming a cutting edge.

The plait-like portion P has been described and shown as at least approximately free from filling material. In specific cases, in particular when using a soft casing material or a fluid filling material, plait-like portion P may contain a small amount of filling material. With regard to the present invention, it is remarkable that the diameter of the plait-like portion P is smaller than the dispensing opening 28 of second portion 26 of dispensing device 20, and that the length of plait-like portion P is sufficient to allow closure clip C closing the first end 12 of tubular casing 10 to project from dispensing opening 28 in the dispensing direction D.

In conjunction with Figs. 1 to 5, tubular casing 10 has been described as having a circular cross section. Naturally, the casing 10 containing the filling material may be of any other suitable cross-section, like a rectangular or triangular cross-section. Accordingly, also at least the first portion 22 of dispensing device 20 should also have a corresponding cross-section to be form-fit attached to the casing 10.

For being dispensable by dispensing device 20, the filling material should be of a respective consistency, e.g. pasty, fluid or granular. Accordingly any filling material being of said consistency, may be packed and dispensed by the packaging combination 1 of the present invention, chemical filling materials, like silicone or grease, as well as food stuff, like sausage meat or the like.

As described above, the present packaging combination 1 may be used without the need of any dispensing or pressing tools. Naturally, in particular when having a tubular casing of a circular cross section, known dispensing or pressing tools may be used to dispense the filling material from the inventive packaging combination.

## Claims

1. A packaging combination for accommodating and dispensing a viscous or granular filling material, the packaging combination (1) comprises a tubular casing (10) having a first end (12) and a second end (14), wherein the tubular casing (10) is partially filled with filling material and closed at its first as well at its second end (12, 14) by a closure means (C), like a closure clip, wherein the partially filled tubular casing (10) comprises a plait-like portion (P) at its first end (12) being at least approximately free of filling material, the packaging combination (1) further comprises a dispensing device (20) having a passageway extending through the dispensing device (20) with an inlet opening (24) at its one end and a dispensing opening (28) at its other end for guiding and dispensing the filling material in a dispensing direction (D), and being attached to the first end (12) of the partially filled and closed tubular casing (10), wherein the plait-like portion (P) of the tubular casing (10) extends through the passageway and beyond the dispensing opening (28) of the dispensing device (20) such that the closure means (C) closing said first end (12) is arranged outside the dispensing opening (28),
**characterized in that** the dispensing device (20) comprises an element of one opening means (30) for opening the tubular casing (10),
wherein the one opening means (30) is entirely provided at the dispensing device (20).

2. The packaging combination according to claim 1,
wherein the opening means (30) are formed by a V-shaped cutout in the dispensing device (20).

3. The packaging combination according to claim 1 or 2,
wherein the opening means (30) is a cutout in the dispensing device and includes at least one cutting element being provided within the cutout and projecting into the clearance of the cutout.

4. The packaging combination according to any of claims 1 to 3,
wherein it is provided a closure cap (40) reversibly attachable to the dispensing device (20) for releasing and closing the dispensing opening (28).

5. The packaging combination according to claim 4,
wherein at least one element of the opening means (30) is provided at the dispensing device (20) and at least another element of the opening means (30) is provided at the closure cap (40).

6. The packaging combination according to claim 5,
wherein the at least one element of the opening means (30) provided at the dispensing device (20) is adapted to hold the first end (12) of the tubular casing (10) such that the closure means (C) are placed outside the dispensing device (20) and that the at least one element of the opening means (30) provided at the closure cap (40) is adapted to cutoff the first end (12) of the tubular casing (10) together with the closure means (C).

7. The packaging combination according to claim 6,
wherein the closure cap (40) is provided with abutment means and wherein the at least one element of the opening means (30) provided at the closure cap (40) is arranged, directed in the abutment direction of the closure cap (40) to the dispensing device (20), behind the abutment means.

8. The packaging combination according to claim 7,
wherein the abutment means are adapted to be broken with the first opening of the packaging combination (1).

9. The packaging combination according to claim 8,
wherein, for the first closing of the packaging combination (20), the closure cap (40) is adapted to be closed on the dispensing device (20) until reaching the abutment means and that, for the first opening of the packaging combination (1), the closure cap (40) is adapted to be moved further in the abutment direction for breaking the abutment means and for bringing in engagement the at least one element of the opening means (30) provided at the dispensing device (20), with the first end (12) of the tubular casing (10) provided at the at least one element of the opening means (30) arranged at the dispensing device (20) for cutting off the first end (12) of the tubular casing (10) together with the closure means (C).

10. The packaging combination according to any of claims 1 to 9,
wherein an indicating unit for indicating the originality of the closure of the dispensing opening (28) provided at the dispensing device (20).

11. The packaging combination according to any of claims 1 to 10,
further comprising a dispensing nozzle (50) having an internal screw thread for being reversibly attachable to the external screw thread of the dispensing device (20).

## Patentansprüche

1. Verpackungskombination zum Aufnehmen und Abgeben eines zähflüssigen oder körnigen Füllmaterials, wobei die Verpackungskombination (1) eine schlauchartige Hülle (10) enthält, welche ein erstes Ende (12) und ein zweites Ende (14) aufweist, wobei die schlauchartige Hülle (10) teilweise mit Füllmaterial gefüllt und an ihrem ersten sowie an ihrem zweiten Ende (12, 14) durch ein Verschlussmittel (C), beispielsweise eine Verschlussklammer, verschlossen ist, wobei die teilweise gefüllte schlauchartige Hülle (10) einen zopfartigen Abschnitt (P) an seinem ersten Ende (12) aufweist, welcher wenigstens annähernd frei von Füllmaterial ist, wobei die Verpakkungskombination (1) weiter eine Abgabevorrichtung (20) enthält, welche einen sich durch die Abgabevorrichtung (20) erstreckenden Durchgang mit einer Einlassöffnung (24) an ihrem einen Ende und einer Abgabeöffnung (28) an ihrem anderen Ende zum Führen und Abgeben des Füllmaterials in einer Abgaberichtung (D) aufweist und an dem ersten Ende (12) der teilweise gefüllten und verschlossenen schlauchartige Hülle (10) befestigt ist, wobei der zopfartige Abschnitt (P) der schlauchartigen Hülle (10) sich durch den Durchgang und über die Abgabeöffnung (28) der Abgabevorrichtung (20) hinaus derart erstreckt, dass das Verschlussmittel (C), welches das erste Ende (12) schließt, außerhalb der Abgabeöffnung (28) angeordnet ist, **dadurch gekennzeichnet, dass** die Abgabevorrichtung (20) ein Element eines Öffnungsmittels (30) zum Öffnen der schlauchartigen Hülle (10) aufweist,
wobei das eine Öffnungsmittel (30) vollständig an der Abgabevorrichtung (20) bereitgestellt ist.

2. Verpackungskombination nach Anspruch 1,
wobei die Öffnungsmittel (30) durch einen V-förmigen Ausschnitt in der Abgabevorrichtung (20) gebildet sind.

3. Verpackungskombination nach Anspruch 1 oder 2,
wobei das Öffnungsmittel (30) ein Ausschnitt in der Abgabevorrichtung ist und wenigstens ein Schneidelement enthält, welches innerhalb des Ausschnitts bereitgestellt ist und sich in den Freiraum des Ausschnitts erstreckt.

4. Verpackungskombination nach einem der Ansprüche 1 bis 3,
wobei eine Verschlusskappe (40) an der Abgabevorrichtung (20) reversibel befestigbar zum Öffnen und Schließen der Abgabeöffnung (28) bereitgestellt ist.

5. Verpackungskombination nach Anspruch 4,
wobei wenigstens ein Element des Öffnungsmittels (30) an der Abgabevorrichtung (20) bereitgestellt ist und wenigstens ein anderes Element des Öffnungsmittels (30) an der Verschlusskappe (40) bereitgestellt ist.

6. Verpackungskombination nach Anspruch 5,
wobei wenigstens das eine an der Abgabevorrichtung (20) bereitgestellte Element des Öffnungsmittels (30) ausgebildet ist, das erste Ende (12) der schlauchartigen Hülle (10) derart zu halten, dass die Verschlussmittel (C) außerhalb der Abgabevorrichtung (20) platziert sind und, dass wenigstens das eine an der Verschlusskappe (40) bereitgestellte Element des Öffnungsmittels (30) ausgebildet ist, das erste Ende (12) der schlauchartigen Hülle (10) zusammen mit dem Verschlussmittel (C) abzuschneiden.

7. Verpackungskombination nach Anspruch 6,
wobei die Verschlusskappe (40) mit Anschlagmitteln versehen ist und wobei wenigstens ein an der Verschlusskappe (40) bereitgestelltes Element des Öffnungsmittels (30) in der Anschlagrichtung der Verschlusskappe (40) zu der Abgabevorrichtung (20) gerichtet und hinter den Anschlagmitteln angeordnet ist.

8. Verpackungskombination nach Anspruch 7,
wobei die Anschlagmittel ausgebildet sind, beim ersten Öffnen der Verpakkungskombination (1) gebrochen zu werden.

9. Verpackungskombination nach Anspruch 8,
wobei die Verschlusskappe (40) für das erste Schließen der Verpackungskombination (20) ausgebildet ist, an der Abgabevorrichtung (20) geschlossen zu werden, bis sie die Anschlagmittel erreicht, und dass die Verschlusskappe (40) für das erste Öffnen der Verpackungskombination (1) ausgebildet ist, weiter in die Anschlagrichtung bewegt zu werden zum Brechen der Anschlagmittel und zum In-Eingriff-Bringen des wenigstens einen an der Abgabevorrichtung (20) bereitgestellten Elements des Öffnungsmittels (30) mit dem ersten Ende (12) der schlauchartigen Hülle (10), bereitgestellt an dem wenigstens einen Element des Öffnungsmittels (30), welches an der Abgabevorrichtung (20) zum Abschneiden des ersten Endes (12) der schlauchartigen Hülle (10) zusammen mit den Verschlussmitteln (C) angeordnet ist.

10. Verpackungskombination nach einem der Ansprüche 1 bis 9,
wobei eine Anzeigeeinheit zum Anzeigen der Originalität des Verschlusses der Abgabeöffnung (28) an der Abgabevorrichtung (20) bereitgestellt ist.

11. Verpackungskombination nach einem der Ansprüche 1 bis 10,
weiter aufweisend eine Abgabedüse (50), welche ein internes Schraubengewinde aufweist, um reversibel an dem externen Schraubengewinde der Abgabevorrichtung (20) befestigbar zu sein.

## Revendications

1. Combinaison d'emballage pour loger et distribuer une matière de remplissage visqueuse ou granulaire, la combinaison (1) d'emballage comprenant une enveloppe (10) tubulaire ayant une première extrémité (12) et une seconde extrémité (14), l'enveloppe (10) tubulaire étant remplie en partie d'une matière de remplissage et fermée à sa première ainsi qu'à sa seconde extrémité (12, 14) par un moyen (C) de fermeture comme une agrafe de fermeture, l'enveloppe . (10) tubulaire remplie en partie comprenant une partie (P) analogue à un pli à sa première extrémité (12), qui est, au moins approximativement, sans matière de remplissage, la combinaison (1) d'emballage comprenant, en outre, un dispositif (20) de distribution ayant un passage s'étendant dans le dispositif (20) de distribution avec une ouverture (24) d'entrée à l'une de ses extrémités et une ouverture (28) de distribution à son autre extrémité pour guider et distribuer la matière de remplissage dans une direction (D) de distribution et étant fixé à la première extrémité (12) de l'enveloppe (10) tubulaire fermée et en partie remplie, la partie (P) analogue à un pli de l'enveloppe (10) tubulaire s'étendant dans le passage et au-delà de l'ouverture (28) de distribution du dispositif (20) de distribution, de manière à ce que le moyen (C) de fermeture fermant la première extrémité (12) soit disposé à l'extérieur de l'ouverture (28) de distribution, **caractérisée en ce que** le dispositif (20) de distribution comprend un élément de moyens (30) d'ouverture pour ouvrir l'enveloppe (10) tubulaire,
les moyens (30) d'ouverture étant prévus entièrement au dispositif (20) de distribution.

2. Combinaison d'emballage suivant la revendication 1,
dans laquelle les moyens (30) d'ouverture sont formés par une découpe en forme de V dans le dispositif (20) de distribution.

3. Combinaison d'emballage suivant la revendication 1 ou 2,
dans laquelle les moyens (30) d'ouverture sont une découpe dans le dispositif de distribution et comprennent au moins un élément de coupe prévu dans la découpe et faisant saillie dans le jeu de la découpe.

4. Combinaison d'emballage suivant l'une quelconque des revendications 1 à 3,
dans laquelle il est prévu un capuchon (40) de fermeture pouvant être fixé de manière réversible au dispositif (20) de distribution pour libérer et fermer l'ouverture (28) de distribution.

5. Combinaison d'emballage suivant la revendication 4,
dans laquelle au moins un élément des moyens (30) d'ouverture est prévu au dispositif (20) de distribution et au moins un autre élément des moyens (30) d'ouverture est prévu au capuchon (40) de fermeture.

6. Combinaison d'emballage suivant la revendication 5,
dans laquelle le au moins un élément des moyens (30) d'ouverture prévu au dispositif (20) de distribution est conçu pour maintenir la première extrémité (12) de l'enveloppe (10) tubulaire, de manière à ce que les moyens (C) de fermeture soient placés à l'extérieur du dispositif (20) de distribution et de manière à ce que le au moins un élément des moyens (30) d'ouverture prévu au capuchon (40) de fermeture soit adapté pour couper la première extrémité (12) de l'enveloppe (10) tubulaire ensemble avec les moyens (C) de fermeture.

7. Combinaison d'emballage suivant la revendication 6,
dans laquelle le capuchon (40) de fermeture est pourvu de moyens de butée et le au moins un élément des moyens (30) d'ouverture prévu au capuchon (40) de fermeture est agencé, en étant dirigé dans la direction de butée du capuchon (40) de fermeture sur le dispositif (20) de distribution derrière les moyens de butée.

8. Combinaison d'emballage suivant la revendication 7,
dans laquelle les moyens de butée sont conçus pour se rompre à la première ouverture de la combinaison (1) d'emballage.

9. Combinaison d'emballage suivant la revendication 8, dans laquelle, pour la première fermeture de la combinaison (1) d'emballage, le capuchon (40) de fermeture est conçu pour être fermé sur le dispositif (20) de distribution jusqu'à atteindre les moyens de butée et en ce que, pour la première ouverture de la combinaison (1) d'emballage, le capuchon (40) de fermeture est conçu pour se déplacer davantage dans la direction de butée, pour rompre les moyens de butée et pour mettre le au moins un élément des moyens (30) d'ouverture prévu au dispositif (20) de distribution en coopération avec la première extrémité (12) de l'enveloppe (10) tubulaire prévue au au moins un élément des moyens (30) d'ouverture disposé au dispositif (20) de distribution pour couper la première extrémité (12) de l'enveloppe (10) tubulaire ensemble avec les moyens (C) de fermeture.

10. Combinaison d'emballage suivant l'une quelconque des revendications 1 à 9,
dans laquelle une unité d'indication, pour indiquer que la fermeture de l'ouverture (28) de distribution est d'origine, est prévue au dispositif (20) de distribution.

11. Combinaison d'emballage suivant l'une quelconque des revendications 1 à 10,
comprenant, en outre, une buse (50) de distribution ayant un taraudage pour être fixée de manière réversible au filetage du dispositif (20) de distribution.
